# EUROPÄISCHE PATENTSCHRIFT

(11) **EP 0 678 059 B1**
(45) Veröffentlichungstag und Bekanntmachung des Hinweises auf die Patenterteilung: **08.10.1997**
(21) Anmeldenummer: 95900685.9
(22) Anmeldetag: 09.11.1994
(51) Int. Cl.: B05B 15/12, B05B 15/04

(54) **AUFFANGVORRICHTUNG FÜR OVERSPRAY IN SPRITZKABINEN**
COLLECTING DEVICE FOR OVERSPRAY IN SPRAYING CHAMBERS
DISPOSITIF COLLECTEUR POUR RECUEILLIR LA PEINTURE PULVERISEE EN EXCES DANS DES CABINES DE PULVERISATION

(30) Priorität: 11.11.1993 DE 4338450
(43) Veröffentlichungstag der Anmeldung: 25.10.1995
(73) Patentinhaber: EISENMANN MASCHINENBAU KG (Komplementär: EISENMANN-Stiftung), D-71032 Böblingen (DE)
(72) Erfinder: HEINE, Werner, D-71364 Winnenden (DE); FLOTHMANN, Wieland, D-71159 Mötzingen (DE); RANGE, Carsten, D-72116 Mössingen (DE); SCHMID, Siegfried, D-73669 Lichtenwald (DE)
(74) Vertreter: Seemann, Norbert W., Dipl.-Ing.
(86) Internationale Anmeldenummer: EP9403689
(87) Internationale Veröffentlichungsnummer: WO9513143

(56) Entgegenhaltungen:
- DE-A- 2 823 958
- PATENT ABSTRACTS OF JAPAN vol. 6, no. 250 (C-139) 9. Dezember 1982 & JP,A,57 147 471 (SHIN NIPPON SEITETSU) 11. September 1982 siehe Zusammenfassung

## Beschreibung

Die Erfindung betrifft eine Auffangvorrichtung für Overspray in Spritzkabinen, insbesondere bei der Spritz- und Sprühbeschichtung von Gegenständen mit lösemittelhaltigen konventionellen Lacken oder mit wasserverdünnbaren Lacken.

Vorrichtungen zum Aufnehmen des beim Spritzen am Werkstück vorbeigespritzten Beschichtungsstoffes sind aus der DE-OS 28 23 958 und dem DE-GM 81 15 387 bekannt.

Nachteil bei diesen bekannten Vorrichtungen ist, daß sie durch ihre Bauform in der Spritzkabine die Luftführung wesentlich stören und Verwirbelungen von Overspray erzeugen, die zum Absetzen und Verschmutzen der betriebsmäßig nicht gereinigten Flächen führen. Bei möglichem Wechsel des Beschichtungsstoffes treten Stoffteilchenverschleppungen auf. Die erforderlichen Abstreifer sind in Ihrer Bauform und Größe abhängig von der Niederschlagsfläche. Die Niederschlagsflächen erzeugen einen Rückprall des Beschichtungsstoffes und können das Beschichtungsergebnis und den Beschichter beeinträchtigen.

Daher besteht die Aufgabe der Erfindung darin, eine Auffangvorrichtung für Overspray in Spritzkabinen zu schaffen, die nicht nur eine weitestgehende Rückgewinnung von Spritzmedien zuläßt, sondern bereits eine Trennung der verwendbaren und der nicht für die Beschichtung direkt wiederverwendbaren Anteile durch mehrere Abscheidestufen vornimmt, einen Wechsel des Beschichtungsstoffes unter Betriebsbedingungen ermöglicht, die erforderliche gleichmäßige Luftführung innerhalb des Beschichtungsbereiches nicht wesentlich beeinflußt, den Anteil an erforderlichen Benetzungs- und Reinigungsmittel wesentlich reduziert.

Diese Aufgabe löst erfindungsgemäß eine Auffangvorrichtung nach dem Oberbegriff des Patentanspruches 1 durch die aufgezeigten kennzeichnenden Merkmale; Weiterbildungen und vorteilhafte Ausführungsvarianten sind in den nachgeordneten Ansprüchen 2 bis 22 niedergeschrieben.

Anhand eines in Zeichnungen schematisiert dargestellten vorteilhaften Ausführungsbeispieles wird folgend die Erfindung näher erläutert.

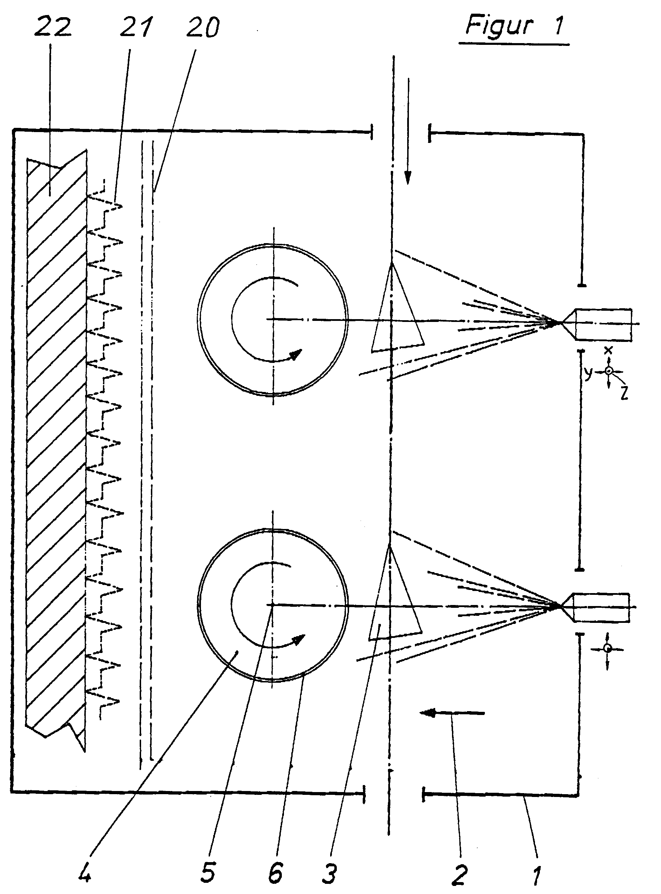

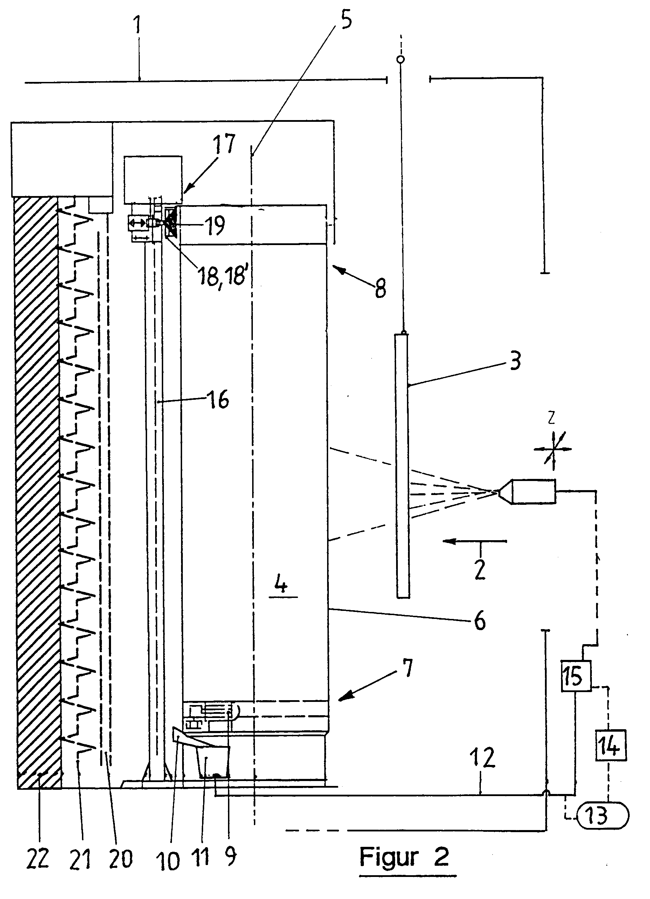

In den Fig. 1 und 2 ist der prinzipielle Aufbau der neuartigen Auffangvorrichtung für Overspray gezeigt. Innerhalb der Spritzkabine 1 ist in Spritzrichtung 2 hinter den zu beschichtenden Werkstücken 3 mindestens ein, sich um seine im wesentlichen vertikal gerichtete Längsachse 5 drehender, zylinderförmiger Auffangkörper 4 vorgesehen und jedem Auffangkörper 4 ist ein System 9, 10, 11 zum Abstreifen des aufgefangenen Oversprays zugeordnet.

Der an der Außenfläche 6 des Auffangkörpers 4 aufgefangene und durch seine Schwerkraft absackende Overspray wird hier von dem im Fußbereich 7 des Auffangkörpers 4 angeordneten, aus wenigstens einem, an einen Teilbereich der Außenfläche 6 des Auffangkörpers 4 angreifenden, im wesentlichen vertikal gerichteten, Abstreifers 9 und einer unterhalb des Auffangkörpers 4 vorgesehenen Ablaufrinne 10 sowie einem mit letzterer 10 verbundenen, wahlweise auswechselbaren Sammelbehälter 11 bestehenden Abstreifsystem aufgenommen.

Bei entsprechender Dimension der Spritzkabine 1 sind mehrere Auffangkörper 4 mit zugeordnetem Abstreifsystem 9, 10, 11 nebeneinander in der Spritzkabine 1 angeordnet.
Ist nun aufgrund der Größe der zu beschichtenden Werkstücke 3 eine horizontale Bewegung der mindestens aus einer Spritz- bzw. Sprühpistole bestehenden Spritzeinheit notwendig, wird der jeweilige Auffangkörper 4 ebenfalls entsprechend geführt bzw. horizontal geneigt oder bei Oberwiegen von horizontalen Spritzbewegungen grundsätzlich in einer horizontalen Lage gehaltert.

Die rotationssymmetrische, insbesondere zylindrische Form des Auffangkörpers 4 hat gegenüber den bekannten Systemen den Vorteil, daß dieser 4 dem Luftstrom nur einen geringen Widerstand bietet; die Abscheideoberfläche ist in Abhängigkeit des Durchmessers auf kleinem Stellraum wesentlich vergrößert und der Rückprall wird durch die Form und zusätzliche Drehung reduziert.

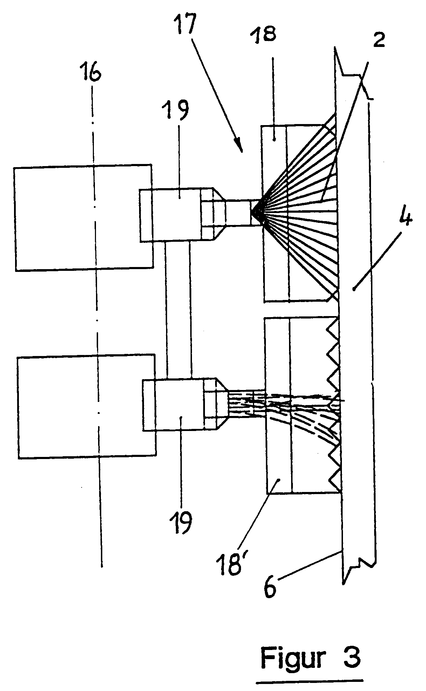

Für einen Beschichtungs-Stoffwechsel erfolgt die Reinigung mit einer später beschriebenen Reinigungseinheit, Fig. 3. Durch die an den Mantel des Auffangkörpers 4 angesetzten Abstreifer 18 bzw. 18' wird das auf dem Zylindermantel verbliebene Restmaterial in der Drehung aufgestaut und fließt kontinuierlich ab. Die Reinigungseinheit läuft an einer Säule 16 kontinuierlich die Zylinderlänge ab. Unmittelbar hinter dem Abstreifer 18 bzw. 18' kann eine zusätzliche Reinigungsbenetzung mittels Sprüheinheit 19 erfolgen. Das durch die Sprüheinheit 19 aufgetragene Reinigungsmittel wird ebenfalls in einem getrennten Durchlauf mit dem Abstreifer 18 bzw. 18' abgetragen und gesammelt. Der Vorteil dieser Vorrichtung ermöglicht den Gebrauch geringer Reinigungsmittelmengen für großflächige Abscheidekörper.

Der verbleibende, von dem Auffangkörper 4 nicht erfaßte Oversprayanteil wird durch die Abluft dem zur Spritzkabine 1 gehörenden Abscheidesystem zugeführt.

In Weiterbildung der Auffangvorrichtung sind nun noch weitere erfinderische Ausgestaltungsvarianten möglich, die die Anwendungsvielfalt und die Rentabilität weiter erhöhen. Um die Auffangvorrichtung sowohl für lösemittelhaltige, konventionelle Lacke, als auch für wasserverdünnbare Lacke günstig einzusetzen, ist zumindest die Außenfläche 6 jedes Auffangkörpers 4 derart gestaltet, daß kein An- bzw. Festhaften des aufgefangenen, gespritzten Beschichtungsstoffes erfolgt und somit ein kontinuierliches Absacken desselben gewährleistet ist.
Dabei kann die Außenfläche 6 aus einem antihaftenden, vorzugsweise aus polyolifinem Material, z.B. einer Propylen-, Äthylen- oder PTFE-Schicht bestehen, oder
die Außenfläche 6 wird mit einer Substanz, vorzugsweise einer Flüssigkeit, benetzt, die auch zur Aufrechterhaltung der Viskosität des aufgefangenen, gespritzen Beschichtungsstoffes dient.

Dabei kann nun die zur Benetzung verwendete Substanz der gespritzte Beschichtungsstoff selbst sein, ein Lösemittel, VE-Wasser oder ein Gemisch aus vorgenannten; welche nun genutzt und ob kontinuierlich oder diskontinuierlich benetzt wird, ist von den gegebenen technologischen Gesamt-Bedingungen an der jeweiligen Spritzkabine abhängig.

Die bereits erwähnte Reinigungseinheit 17 ist für jeden installierten Auffangkörper 4 oberhalb des Kopfbereiches 8 der Auffangkörper 4 parkbar, in Parkposition P vom Spritzraum der Spritzkabine 1 abgekapselt, zum Reinigen der Auffangkörper 4 ausfahrbar und an einer Säule 16 parallel zu der Längsachse 5 beweglich geführt, mit zugeordneter, wahlweise einschaltbarer Sprüheinheit 19 sowie mindestens einem Abstreifer 18, 18' versehen, angeordnet, wobei die Reinigungsvorrichtung 17 durch ihr Eigengewicht unterstützt an der Säule 16, die aus stoffabweisendem Material besteht, bewegbar ist.
Nun kann die Reinigungseinheit 17 noch mit zwei, in Bewegungsrichtung nebeneinander angeordneten, Abstreifern 18 und 18', die wahlweise an die Außenfläche 6 der Auffangkörper 4 anstellbar sind, ausgestattet sein.

Für eine schnelle Handhabung beim Beschichtungsstoffwechsel sind die Abstreifer 18 und 18' mit einem an sich bekannten Schnellwechsler an der Reinigungseinheit 17 gehaltert.

Des weiteren liegt es im Wesen der Erfindung, daß die Sprüheinheit 19 der Reinigungseinheit 17 zum Auftrag der Benetzungsubstanz genutzt wird.

Der aufgefangene und gesammelte Overspray wird der Spritzeinrichtung der Spritzkabine 1 wieder zugeführt; entweder direkt vom Sammelbehälter 11 über eine Leitung 12 zum Vorratstank 15, oder dieser wird je nach Beschaffenheit noch über eine Aufbereitungsstation 13 und/oder Mischstation 14 geleitet.

Ein weiteres Ausgestaltungsmerkmal ist die Anordnung des Drehantriebes des Auffangkörpers 4 innerhalb seines Außendurchmessers.
Zum anderen besteht eine weitere mögliche Ausgestaltungsvariante noch darin, den Auffangkörper 4 zu erden und/oder diesen 4 zu kühlen, wobei dieses Kühlen zur Unterschreitung des Taupunktes der vorbeiströmenden Absaugluft dient und somit das Absacken des aufgefangenen Beschichtungsstoffes fördert.

Das Erden des Auffangkörpers 4 bewirkt dagegen ein verstärktes Auffangen des Oversprays und eine Stabilisierung des Spritzstrahles selbst und reduziert die Nebelbildung.

Der verbleibende, von dem bzw. den Auffangkörper 4 nicht aufgefangene, geringe Restoverspray, wird mit der Absaugluft in einem der Spritzkabine 1 beigeordneten, an sich bekannten, Abscheidesystem erfaßt. In Fortführung des erfinderischen Grundgedankens kann zudem das nachgeschaltete Abscheidesystem aus reinigungsfähigen Prallplatten mit in Richtung der Luftführung anschließend angeordneten geerdeten Elektroden zum Absetzen der bereits trockenen Stoffpartikel bestehen, wobei die Anströmung der Auffangkörper 4 und der Prallplatten vorzugsweise senkrecht zur Längsachse erfolgt.

### Bezugszeichenverzeichnis

- 1: Spritzkabine
- 2: Spritzrichtung
- 3: Werkstück
- 4: Auffangkörper
- 5: Längsachse
- 6: Außenfläche
- 7: Fußbereich
- 8: Kopfbereich
- 9: Abstreifer
- 10: Ablaufrinne
- 11: Sammelbehälter
- 12: Leitung
- 13: Aufbereitungsstation
- 14: Mischstation
- 15: Vorratstank
- 16: Säule
- 17: Reinigungseinheit
- 18, 18': Abstreifer
- 19: Sprüheinheit
- 20: Prallabscheider
- 21: Elektroden
- 22: Feinfilter
- P: Parkposition

## Patentansprüche

1. Auffangvorrichtung für Overspray in Spritzkabinen,
**dadurch gekennzeichnet,**
daß innerhalb der Spritzkabine (1) in Spritzrichtung (2) hinter den zu beschichtenden Werkstücken (3) mindestens ein,sich um seine im wesentlichen vertikal gerichtete Längsachse (5) drehender, zylinderförmiger Auffangkörper (4) vorgesehen ist, und daß jedem Auffangkörper (4) ein System (9, 10, 11) zum Abstreifen des aufgefangenen Oversprays zugeordnet ist.

2. Auffangvorrichtung nach Anspruch 1,
**dadurch gekennzeichnet,**
daß der an der Außenfläche (6) des Auffangkörpers (4) aufgefangene und durch seine Schwerkraft absackende Overspray von dem im Fußbereich (7) des Auffangkörpers (4) angeordneten, aus wenigstens einem, an einen Teilbereich der Außenfläche (6) des Auffangkörpers (4) angreifenden, im wesentlichen vertikal gerichteten Abstreifers (9) und einer unterhalb des Auffangkörpers (4) vorgesehenen Ablaufrinne (10) sowie einem mit letzterer (10) verbundenen, wahlweise auswechselbaren Sammelbehälter (11) bestehenden Abstreifsystem aufgenommen wird.

3. Auffangvorrichtung nach Anspruch 1 oder 2,
**dadurch gekennzeichnet,**
daß mehrere Auffangkörper (4) mit zugeordnetem Abstreifsystem (9, 10, 11) nebeneinander in der Spritzkabine (1) angeordnet sind.

4. Auffangvorrichtung nach einem der Ansprüche 1 bis 3,
**dadurch gekennzeichnet,**
daß bei einer horizontalen Bewegung einer mindestens aus einer Spritz- bzw. Sprühpistole bestehenden Spritzeinheit der jeweilige Auffangkörper (4) ebenfalls entsprechend geführt bzw. horizontal gehaltert wird.

5. Auffangvorrichtung nach einem der Ansprüche 1 bis 4,
**dadurch gekennzeichnet,**
daß zumindest die Außenfläche (6) jedes Auffangkörpers (4) derart gestaltet ist, daß kein Anbzw. Festhalten des aufgefangenen, gespritzten Beschichtungsstoffes erfolgt und somit ein kontinuierliches Absacken desselben gewährleistet ist.

6. Auffangvorrichtung nach Anspruch 5,
**dadurch gekennzeichnet,**
daß die Außenfläche (6) aus einem antihaftenden, vorzugsweise aus polyolifinem Material, z.B. einer Propylen-, Athylen- oder PTFE-Schicht besteht.

7. Auffangvorrichtung nach Anspruch 5,
**dadurch gekennzeichnet,**
daß die Außenfläche (6) mit einer Substanz, vorzugsweise einer Flüssigkeit, benetzt wird, die zur Aufrechterhaltung der Viskosität des aufgefangenen, gespritzten Beschichtungsstoffes dient.

8. Auffangvorrichtung nach Anspruch 7,
**dadurch gekennzeichnet,**
daß die zur Benetzung verwendete Substanz der gespritzte Beschichtungsstoff selbst ist.

9. Auffangvorrichtung nach einem der Ansprüche 7 oder 8,
**dadurch gekennzeichnet,**
daß die Benetzung kontinuierlich erfolgt.

10. Auffangvorrichtung nach einem der Ansprüche 7 oder 8,
**dadurch gekennzeichnet,**
daß die Benetzung diskontinuierlich erfolgt.

11. Auffangvorrichtung nach einem der Ansprüche 5 bis 10,
**dadurch gekennzeichnet,**
daß die Außenfläche (6) der Auffangkörper (4) geerdet und/oder zur Unterschreitung des Taupunktes der vorbeiströmenden Absaugluft gekühlt ist.

12. Auffangvorrichtung nach einem der Ansprüche 7 bis 11,
**dadurch gekennzeichnet,**
daß für jeden installierten Auffangkörper (4) eine oberhalb des Kopfbereiches (8) der Auffangkörper (4) parkbare, in Parkposition (P) vom Spritzraum der Spritzkabine (1) abgekapselte, zum Reinigen der Auffangkörper (4) ausfahrbare und an einer Säule (16) parallel zu der Längsachse (5) beweglich geführte Reinigungseinheit (17) mit zugeordneter, wahlweise einschaltbarer Sprüheinheit (19) sowie mindestens einem Abstreifer (18, 18') vorgesehen ist.

13. Auffangvorrichtung nach Anspruch 12,
**dadurch gekennzeichnet,**
daß die Reinigungsvorrichtung (17) sich durch Ihr Eigengewicht an der Säule (16), die aus stoffabweisendem Material besteht, bewegt.

14. Auffangvorrichtung nach Anspruch 12 oder 13,
**dadurch gekennzeichnet,**
daß die Reinigungseinheit (17) zwei, in Bewegungsrichtung nebeneinander angeordnete, Abstreifer (18) und (18'), die wahlweise an die Außenfläche (6) der Auffangkörper (4) anstellbar sind, aufweist.

15. Auffangvorrichtung nach einem der Ansprüche 12 bis 14,
**dadurch gekennzeichnet,**
daß die Abstreifer (18 und 18') mit einem an sich bekannten Schnellwechsler an der Reinigungseinheit (17) gehaltert sind.

16. Auffangvorrichtung nach einem der Ansprüche 12 bis 15,
**dadurch gekennzeichnet,**
daß die Sprüheinheit (19) der Reinigungseinheit (17) zum Auftrag der Benetzungssubstanz genutzt wird.

17. Auffangvorrichtung nach einem der Ansprüche 1 bis 16,
**dadurch gekennzeichnet,**
daß das aufgefangene und gesammelte Overspray der Spritzeinrichtung der Spritzkabine (1) zugeführt wird.

18. Auffangvorrichtung nach einem der Ansprüche 1 bis 17,
**dadurch gekennzeichnet,**
daß der Drehantrieb des Auffangkörpers (4) innerhalb seines Außendurchmessers angeordnet ist.

19. Auffangvorrichtung nach einem der Ansprüche 1 bis 18,
**dadurch gekennzeichnet,**
daß der Auffangkörper (4) von der Absaugluft umströmt wird und nicht aufgenommene Oversprayteilchen in dem nachgeschalteten, bekannten Abscheidesystem der Spritzkabine (1) aufgefangen werden.

20. Vorrichtung nach einem der Ansprüche 1 bis 18,
**dadurch gekennzeichnet,**
daß das nachgeschaltete Abscheidesystem aus reinigungsfähigen Prallplatten mit in Richtung der Luftführung anschließend angeordneten, geerdeten Elektroden zum Absetzen der trockenen Stoffpartikel besteht.

21. Vorrichtung nach Anspruch 1 bis 20,
**dadurch gekennzeichnet,**
daß die Anströmung der Auffangkörper (4) und der Prallplatten vorzugsweise senkrecht zur Längsachse erfolgt.

22. Vorrichtung nach Anspruch 1 bis 16,
**dadurch gekennzeichnet,**
daß elektrostatisch geladener Beschichtungsstoff auf den Feldlinien zwischen Zerstäuber und Zylinderoberfläche stabilisiert und somit die Nebelbildung reduziert wird.

## Claims

1. Collecting device for overspray in spray booths, characterised in that at least one cylinder-shaped collecting body (4), which rotates about its substantially vertically oriented longitudinal axis (5), is provided within the spray booth (1) behind the workpieces (3), which are to be painted, in direction (2) of spraying and that each collecting body (4) is associated with a system (9, 10, 11) for stripping off the collected overspray.

2. Collecting device according to claim 1, characterised in that the overspray, which is collected at the outer surface (6) of the collecting body (4) and drops down due to its gravitational force, is picked up by the stripper system, which is arranged in the foot region (7) of the collecting body (4) and which consists of at least one substantially vertically oriented stripper (9) engaging at a part region of the outer surface (6) of the collecting body (4) and a drainage channel (10) provided below the collecting body (4) as well as a selectably exchangeable collecting container (11) connected with the latter (10).

3. Collecting device according to claim 1 or 2, characterised in that several collecting bodies (4) with associated stripper system (9, 10, 11) are arranged adjacent to one another in the spray booth (1).

4. Collecting device according to one of claims 1 to 3, characterised in that on horizontal movement of a spray unit, which consists at least of a spray gun or a mist gun, the respective collecting body (4) is likewise correspondingly guided and kept horizontal.

5. Collecting device according to one of claims 1 to 4, characterised in that at least the outer surface (6) of each collecting body (4) is shaped in such a manner that no adhesion or retention of the collected, sprayed painting material takes place and thus a continuous dropping down of the same is ensured.

6. Collecting device according to claim 5, characterised in that the outer surface (6) consists of an anti-adhesion material preferably of polyolefines, for example of a propylene, ethylene or polytetrafluoroethylene coating.

7. Collecting device according to claim 5, characterised in that the outer surface (6) is wetted with a substance, preferably a liquid, which serves to maintain the viscosity of the collected, sprayed painting material.

8. Collecting device according to claim 7, characterised in that the substance used for the wetting is the sprayed painting material itself.

9. Collecting device according to one of claims 7 and 8, characterised in that the wetting is carried out continuously.

10. Collecting device according to one of claims 7 and 8, characterised in that the wetting is carried out discontinuously.

11. Collecting device according to one of claims 5 to 10, characterised in that the outer surface (6) of the collecting body (4) is earthed and/or, for falling below the condensation point of the suction air flowing past, is cooled.

12. Collecting device according to one of claims 7 to 11, characterised in that a cleaning unit (17), which can be parked above the head region (8) of the collecting body (4), is enclosed by the spray chamber of the spray booth (1) in the park position (P), can be driven out for cleaning of the collecting body (4) and is movably guided at a column (16) parallel to the longitudinal axis (5), is provided for each installed collecting body (4) together with an associated spray unit (19), which is selectably able to be switched on, as well as at least one stripper (18, 18').

13. Collecting device according to claim 12, characterised in that the cleaning device (17) is moved by its own weight at the column (16), which consists of a substance-repellent material.

14. Collecting device according to claim 12 or 13, characterised in that the cleaning unit (17) comprises two strippers (18 and 18'), which are arranged adjacent to one another in movement direction and are selectably settable against the outer surface (6) of the collecting body.

15. Collecting device according to one of claims 12 to 14, characterised in that the strippers (18 and 18') are retained at the cleaning unit (17) by a quick-change device which is known per se.

16. Collecting device according to one of claims 12 to 15, characterised in that the spray unit (19) of the collecting unit (17) is used for the application of the wetting substance.

17. Collecting device according to one of claims 1 to 16, characterised in that the collected and gathered up overspray is fed to the spray equipment of the spray booth (1).

18. Collecting device according to one of claims 1 to 17, characterised thereby that the rotary drive of the collecting body (4) is arranged within its outer diameter.

19. Collecting device according to one of claims 1 to 18, characterised in that the collecting body (4) is flowed around by the suction air and overspray particles, which are not picked up, are collected in the known downstream separator system of the spray booth (1).

20. Collecting device according to one of claims 1 to 18, characterised in that the downstream separator system consists of baffle plates, which are capable of cleaning, with earthed electrodes, which are arranged to adjoin in the direction of the air guidance, for deposition of the dry paint particles.

21. Collecting device according to claim 1 to 20, characterised in that the flow contact with the collecting body (4) and the baffle plates preferably takes place perpendicularly to the longitudinal axis.

22. Collecting device according to claim 1 to 16, characterised in that the electrostatically charged painting material is stabilised on the field lines between atomiser and cylinder surface and thus the mist formation is reduced.

## Revendications

1. Dispositif collecteur pour recueillir la peinture pulvérisée en excès dans des cabines de pulvérisation,
**caractérisé** en ce qu'au moins un corps collecteur cylindrique (4), rotatif autour de son axe longitudinal (5) orienté sensiblement à la verticale, est prévu à l'intérieur de la cabine de pulvérisation (1) en arrière, dans la direction de pulvérisation (2), des pièces (3) à enduire, et en ce qu'un système (9, 10, 11) pour enlever par raclage la peinture pulvérisée en excès recueillie est associé à chaque corps collecteur (4).

2. Dispositif collecteur selon la revendication 1, **caractérisé** en ce que la peinture pulvérisée en excès, recueillie sur la face extérieure (6) du corps collecteur (4) et tombant par sa pesanteur, est collectée par le système de raclage, disposé dans la région de pied (7) du corps collecteur (4) et constitué d'au moins un racloir (9) orienté sensiblement à la verticale et agissant sur une région partielle de la face extérieure (6) du corps collecteur (4), d'une rigole d'évacuation (10), prévue en dessous du corps collecteur (4), et d'un récipient collecteur (11), relié à la rigole (10) et remplaçable à volonté.

3. Dispositif collecteur selon la revendication 1 ou 2, **caractérisé** en ce que plusieurs corps collecteurs (4) avec un système de raclage associé (9, 10, 11) sont disposés les uns à côté des autres dans la cabine de pulvérisation (1).

4. Dispositif collecteur selon une des revendications 1 à 3, **caractérisé** en ce que, lors d'un déplacement horizontal d'une unité de pulvérisation constituée au moins d'un pistolet de pulvérisation ou pulvérisateur, le corps collecteur respectif (4) est également guidé d'une manière correspondante, ou maintenu horizontal.

5. Dispositif collecteur selon une des revendications 1 à 4, **caractérisé** en ce qu'au moins la face extérieure (6) de chaque corps collecteur (4) est configurée de telle sorte que le produit d'enduction pulvérisé qu'elle recueille n'est pas retenu ou encore immobilisé, garantissant ainsi que ce produit tombe continuellement.

6. Dispositif collecteur selon la revendication 5, **caractérisé** en ce que la face extérieure (6) est constituée d'un matériau empêchant l'adhérence, de préférence un matériau polyoléfinique, par exemple une couche de propylène, d'éthylène ou de polytétrafluoréthylène.

7. Dispositif collecteur selon la revendication 5, **caractérisé** en ce que la face extérieure (6) est imprégnée d'une substance, de préférence d'un liquide, qui sert à maintenir la viscosité du produit d'enduction pulvérisé et recueilli.

8. Dispositif collecteur selon la revendication 7, **caractérisé** en ce que la substance utilisée pour l'imprégnation est le produit d'enduction pulvérisé lui-même.

9. Dispositif collecteur selon la revendication 7 ou 8, **caractérisé** en ce que l'imprégnation s'effectue de façon continue.

10. Dispositif collecteur selon la revendication 7 ou 8, **caractérisé** en ce que l'imprégnation s'effectue de façon discontinue.

11. Dispositif collecteur selon une des revendications 5 à 10, **caractérisé** en ce que la face extérieure (6) des corps collecteurs (4) est mise à la terre et/ou refroidie afin de tomber en dessous du point de condensation de l'air d'aspiration qui passe devant elle.

12. Dispositif collecteur selon une des revendications 7 à 11, **caractérisé** en ce qu'on a prévu, pour chaque corps collecteur installé (4), une unité de nettoyage (17) pouvant être rangée au-dessus de la région de tête (8) des corps collecteurs (4), étanchée par rapport à la chambre de pulvérisation de la cabine de pulvérisation (1) en position de rangement (P), pouvant être déployée pour nettoyer les corps collecteurs (4), guidée en déplacement parallèlement à l'axe longitudinal (5) sur une colonne (16) et pourvue d'une unité de pulvérisation (19) sélectivement enclenchable, ainsi que d'au moins un racloir (18, 18').

13. Dispositif collecteur selon la revendication 12, **caractérisé** en ce que le dispositif de nettoyage (17) se déplace par son propre poids sur la colonne (16), qui est réalisée en un matériau repoussant le produit.

14. Dispositif collecteur selon la revendication 12 ou 13, **caractérisé** en ce que l'unité de nettoyage (17) présente deux racloirs (18, 18'), disposés l'un à côté de l'autre dans la direction de déplacement; qui peuvent être sélectivement appliqués contre la face extérieure (6) des corps collecteurs (4).

15. Dispositif collecteur selon une des revendications 12 à 14, **caractérisé** en ce que les racloirs (18 et 18') sont maintenus sur l'unité de nettoyage (17) par un dispositif de serrage rapide en soi connu.

16. Dispositif collecteur selon une des revendications 12 à 15, **caractérisé** en ce que l'unité de pulvérisation (19) de l'unité de nettoyage (17) est utilisée pour appliquer la substance d'imprégnation.

17. Dispositif collecteur selon une des revendications 1 à 16, **caractérisé** en ce que la peinture pulvérisée en excès recueillie et collectée est apportée au dispositif de pulvérisation de la cabine de pulvérisation (1).

18. Dispositif collecteur selon une des revendications 1 à 17, **caractérisé** en ce que l'entraînement en rotation du corps collecteur (4) est disposé à l'intérieur de son diamètre extérieur.

19. Dispositif collecteur selon une des revendications 1 à 18, **caractérisé** en ce que le corps collecteur (4) est contourné par l'air d'aspiration, et les particules de peinture pulvérisée en excès non recueillies sont absorbées dans le système de séparation connu, monté en aval, de la cabine de pulvérisation (1).

20. Dispositif collecteur selon une des revendications 1 à 18, **caractérisé** en ce que le système de séparation monté en aval est constitué de plaques déflectrices nettoyantes, avec des électrodes mises à la terre, disposées à la suite dans la direction de guidage de l'air, pour la déposition des particules sèches de produit.

21. Dispositif collecteur selon une des revendications 1 à 20, **caractérisé** en ce que l'afflux sur les corps collecteurs (4) et les plaques déflectrices s'effectue de préférence perpendiculairement à l'axe longitudinal.

22. Dispositif collecteur selon une des revendications 1 à 16, **caractérisé** en ce que du produit d'enduction électrostatiquement chargé est stabilisé sur les lignes de champ entre le pulvérisateur et la surface du cylindre, réduisant ainsi la nébulosité.
